# EUROPÄISCHE PATENTSCHRIFT

(11) **EP 0 728 294 B1**
(45) Veröffentlichungstag und Bekanntmachung des Hinweises auf die Patenterteilung: **08.07.1998**
(21) Anmeldenummer: 95900620.6
(22) Anmeldetag: 09.11.1994
(51) Int. Cl.: G01B 7/34, G01N 27/00

(54) **HALTERUNG FÜR EINE TASTSPITZE EINES RASTERKRAFT- ODER RASTERTUNNELMIKROSKOPS**
MOUNTING FOR A PROBE TIP IN A SCANNING FORCE OR SCANNING TUNNELING MICROSCOPE
SYSTEME DE FIXATION POUR LA POINTE D'EXPLORATION D'UN MICROSCOPE A EFFET TUNNEL OU A FORCES ATOMIQUES

(30) Priorität: 12.11.1993 DE 4338688
(43) Veröffentlichungstag der Anmeldung: 28.08.1996
(73) Patentinhaber: FORSCHUNGSZENTRUM JÜLICH GMBH, 52425 Jülich (DE)
(72) Erfinder: SAURENBACH, Frank, D-52134 Herzogenrath (DE); FUSS, Hans-Achim, D-52428 Jülich (DE)
(86) Internationale Anmeldenummer: DE9401334
(87) Internationale Veröffentlichungsnummer: WO9513518

(56) Entgegenhaltungen:
- REVIEW OF SCIENTIFIC INSTRUMENTS., Bd.62, Nr.5, Mai 1991, NEW YORK US Seiten 1280 - 1284 P.J.MULHERN ET AL 'A scanning force microscope with a fiber-optic-interferometer displacement sensor'
- IBM TECHNICAL DISCLOSURE BULLETIN., Bd.31, Nr.9, Februar 1989, NEW YORK US Seite 216 'Tip revolver for scanning tunneling microscope'
- PATENT ABSTRACTS OF JAPAN vol. 18, no. 519 (P-1807) 29. September 1994 & JP,A,06 180 222 (OLYMPUS OPTICAL CO LTD) 28. Juni 1994
- MEASUREMENT SCIENCE AND TECHNOLOGY, Bd.4, Nr.7, Juli 1993, BRISTOL GB Seiten 769 - 775 A.MOSER ET AL 'A miniature fibre optic force microscope scan head'
- PATENT ABSTRACTS OF JAPAN vol. 17, no. 522 (P-1616) 20. September 1993 & JP,A,05 141 961 (OLYMPUS OPTICAL CO LTD) 8. Juni 1993

## Beschreibung

Die Erfindung bezieht sich auf eine Halterung für eine Tastspitze eines Rastersondenmikroskops, mit der die Topographie einer Probenoberfläche abgetastet wird und das insbesondere zur Messung v.d. Vaals'scher, magnetischer oder elektrostatischer Kräfte dient. Die Bewegung der Tastspitze wird interferometrisch ermittelt. Hierzu ist zumindest ein Lichtstrahl eingesetzt, dessen Lichtstrahlaustritt mit geringem Abstand ortsfest gegenüber der sich relativ zum Lichtstrahlaustritt bewegenden Tastspitze derart angeordnet ist, daß die Interferenz zwischen am Lichtstrahlaustritt reflektiertem und von der Tastspitze reflektiertem Lichtstrahl mittels Interferometer meßbar ist.

Rastersondenmikroskope benötigen hohe Tastspitzenqualitäten, um einwandfreie Messungen durchführen zu können. Es ist deshalb häufig ein Wechsel der Tastspitze erforderlich. Dies ist jedoch mit hohem Aufwand verbunden, weil mit jedem Wechsel ein erneutes Justieren des Detektionssystems verbunden ist. Die Tastspitze ist bei interferometrischer Messung in einer Entfernung von 10 - 20 µm zum Lichtstrahlaustritt des Lichtleiters zu positionieren, um ein möglichst von Lichtstreuungen freies Reflektionssignal zu erhalten. Zur Feinjustierung werden mechanische oder piezoelektrische Positionierelemente verwendet, das Justieren erfolgt unter dem Mikroskop.

Aufgabe der Erfindung ist es, das Justieren von Tastspitze und Lichtleiter zu erleichtern und den Tastspitzenwechsel zu vereinfachen.

Diese Aufgabe wird bei einer Halterung der eingangs genannten Art durch die in Patentanspruch 1 angegebenen Merkmale gelöst. Danach wird der Lichtstrahlleiter in einer Ferrule geführt, die relativ zur sich bewegenden Tastspitze ortsfest an der Halterung montiert ist. Die Tastspitze ist an der Ferrule derart befestigt, daß der Lichtstrahlaustritt des Lichtstrahlleiters nach Montage der Ferrule einen vorgegebenen Abstand zum lichtstrahlreflektierenden Tastenspitzenenede aufweist. Ferrulen sind aus der Glasfaserstecktechnik bekannt. Es handelt sich um paßgenau gefertigte Keramikteile, von denen eine geschlitzte Keramikröhre als Führung für zwei Keramikkerne dient, die jeweils von den gegenüberliegenden Enden der Keramikröhre in die Keramikröhre einschiebbar sind. Die Glasfaserenden der Lichtleiter sind dann im Abstand von 1 µm zueinander exakt fluchtend positioniert, so daß das Licht aus der einen Glasfaser mit hoher Genauigkeit in die andere Glasfaser eingekoppelt wird. Von dieser bekannten Lichtleiterkupplung werden für die Erfindung nur die geschlitzte Keramikröhre und ein Keramikkern benutzt, an dem der Lichtleiter angebracht ist. Die Keramikröhre wird an der Halterung für die Tastspitze befestigt und dient als Einschub für den den Lichtleiter aufnehmenden Keramikkern, der nach Anordnen der Halterung am Rastersondenmikroskop in die Keramikröhre eingesetzt und auf 1 µm genau in jeweils durch die Keramikröhre vorgegebener Position im gewünschten Abstand vom lichtstrahlreflektierenden Tastspitzenende entfernt in der Keramikröhre verklemmt wird. Ein Justieren des Lichtleiters gegenüber der Tastspitze am Rastersondenmikroskop entfällt.

In weiterer Ausgestaltung der Erfindung ist nach Patentanspruch 2 zum Befestigen der Tastspitze an der Ferrule eine Steckverbindung vorhanden. Die Steckverbindung erleichtert den Auswechselvorgang, insbesondere bei kraftschlüssig verbindbaren Kupplungselementen, Patentanspruch 3. Bevorzugt ist ein rohrförmiges Kupplungselement in seiner Achsrichtung geschlitzt ausgeführt und auf der Ferrule verspannbar, Patentanspruch 4. Zur Bewegung der Ferrule in Abstandsgrößenordnungen von µm ist die Ferrule nach Patentanspruch 5 mit einem piezoelektrischen Rasterelement verbunden.

Die Erfindung wird nachfolgend anhand eines in der Zeichnung schematisch wiedergegebenen Ausführungsbeispiels näher erläutert. Es zeigen im einzelnen:

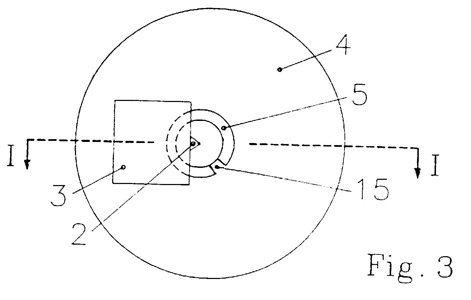

- Figur 1: an einem piezoelektrischen Rasterelement befestigte Halterung für eine Tastspitze im Längsschnitt gemäß Schnittlinie I/I nach Figur 3;
- Figur 2: vergrößerter Ausschnitt "X" nach Figur 1;
- Figur 3: Aufsicht auf die Halterung für die Tastspitze nach Figur 1 gemäß Sichtrichtung III/III (ohne Probe P).

In der Zeichnung ist eine Halterung für eine Tastspitze 1 für ein Rastersondenmikroskop im Längsschnitt gezeigt. Die Tastspitze 1 ist an einem Spitzenhalter 2 befestigt, der Teil eines Befestigungsstückes 3 ist, das an einer Steckverbindung 4 angebracht ist. Zur Steckverbindung 4 gehört ein Kupplungselement 5, das sich auf eine Ferrule 6 mit einer als Lichtstrahlleiter dienenden Glasfaser 7 aufstecken läßt. Der Spitzenhalter 2 mit Tastspitze 1, das Befestigungsstück 3 und die Steckverbindung 4 mit Kupplungselement 5 bilden eine miteinander fest verbundene Montageeinheit.

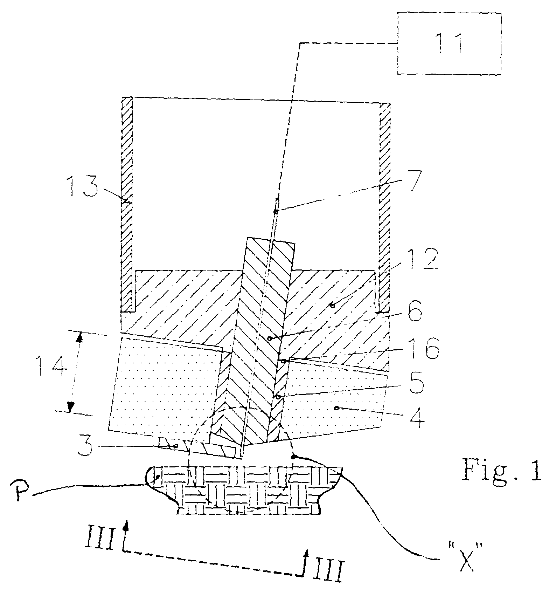

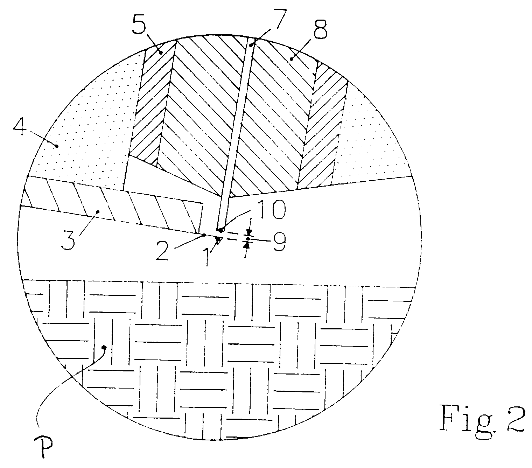

Die Glasfaser 7 ist zentral in der Ferrule 6 bis zum Ferrulenkopf 8 geführt, ragt am Ferrulenkopf 8 aus der Ferrule 6 heraus und endet in geringem Abstand 9 oberhalb der Rückseite des Spitzenhalters 2, siehe Figur 2. Am Glasfaserende tritt der von der Glasfaser 7 geleitete Lichtstrahl aus, Lichtstrahlaustritt 10, und wird zu einem Teil am Glasfaserende reflektiert. Der austretende Lichtstrahlanteil wird an der rückseitigen Oberfläche der Tastspitze 1 bzw. an der Oberfläche des Spitzenhalters 2 reflektiert, von der Glasfaser 7 wieder aufgenommen und interferiert somit mit dem am Glasfaserende reflektierten Lichtstrahlanteil. Die Intereferenzmessung zwischen den auf der Oberfläche der Tastspitze 1 bzw. des Spitzenhalters 2 und den am Glasfaserende 7 reflektierten Lichtstrahlanteilen wird im Interferometer 11 gemessen, das in Figur 1 schematisch wiedergegeben ist.

Der Spitzenhalter 2 ist im Ausführungsbeispiel als Blattfeder ausgebildet, die vom Befestigungsstück 3 ausgehend am auskragenden Ende die Tastspitze 1 trägt, die somit federnd auslenkbar ist. Das Befestigungsstück besteht im Ausführungsbeispiel aus Si, der Spitzenhalter 2 mit Tastspitze 1 ist aus dem Befestigungsstück 3 herausgearbeitet, bildet also mit dem Befestigungsstück ein einheitliches Bauelement. Bei einer relativen Bewegung der Tastspitze 1 gegenüber einer Probenoberfläche, die in Figuren 1 und 2 ausschnittsweise dargestellt und mit Probe P bezeichnet ist, bewegt sich die Tastspitze 1 entsprechend der Oberflächentopographie bzw. entsprechend der unterschiedlichen Oberflächeneigenschaften, insbesondere der unterschiedlichen v.d. Vaals'schen Kräfte oder der magnetischen oder elektrostatischen Domänen.

Zur Messung der bei der Bewegung der Tastspitze 1 erfolgenden Auslenkung des Spitzenhalters 2 dient die sich ändernde Interferenz zwischen dem am Lichtstrahlaustritt 10 reflektierten Lichtstrahlteil und dem an der Oberfläche des Spitzenhalters 2 reflektierten, am Lichtstrahlaustritt 10 ausgetretenen Lichtstrahlteil. Die Änderung der Interferenz wird mit dem Interferometer 11 ermittelt.

Die Ferrule 6 ist mit einem Ferrulenhalter 12 innerhalb eines Piezorohrs 13 befestigt und ortsfest angebracht. Das Piezorohr 13 dient als Piezo-Rasterelement. Die Ferrule 6 ist im Ausführungsbeispiel zylinderförmig ausgebildet und überragt den Ferrulenhalter 12 um eine Aufstecklänge 14 zum Aufstecken des Befestigungsstückes 3 mittels des Kupplungselements 5. Das Kupplungselement 5 ist hierzu rohrförmig ausgestaltet und weist einen sich in Achsrichtung erstreckenden Schlitz 15 auf. Die Abmessungen des Innendurchmessers des rohrförmigen Kupplungselements 5 und des Außendurchmessers der Ferrule 6 über die Aufstecklänge 14 sind derart bemessen, daß die Steckverbindung 4 kraftschlüssig an der Ferrule 6 befestigbar ist. Dabei sind die Aufstecklänge 14 und die Abmessungen der Steckverbindung 4 so aufeinander abgepaßt, daß sich nach jedem Aufstecken der Steckverbindung 4 auf der Ferrule 6 ein stets gleichbleibender Abstand 9 zwischen Lichtstrahlaustritt 10 und gegenüberliegender rückwärtiger Oberfläche des Spitzenhalters 2 ergibt. Im Ausführungsbeispiel ist hierzu am Ferrulenhalter 12 ein Anschlag 16 für das Kupplungsstück 5 vorgesehen. Der Abstand 9 beträgt zwischen 10 - 20 µm, im Ausführungsbeispiel 15 µm. Die Ferrule 6 weist einen äußeren Durchmesser von d = 2,5 mm auf.

Zum Festklemmen der Steckverbindung 4 auf der Ferrule 6 lassen sich am Kupplungselement 5 auch Klemmen befestigen, die sich mittels einer Spannschraube gegeneinander verspannen lassen. In der Zeichnung ist eine solche Befestigungsmöglichkeit der Steckverbindung an der Ferrule nicht dargestellt.

Durch Anlegen elektrischer Spannungsdifferenzen am Piezomaterial des Piezorohres 13 läßt sich die an der Montageeinheit am Spitzenhalter 2 vorgesehene Tastspitze 1 relativ zur Probenoberfläche der Probe P bewegen. Die Tastspitze kann zur Abtastung der Topographie der Probenoberfläche eingesetzt werden, sie ist insbesondere zur Messung v.d. Waals'scher Kräfte oder zur Messung magnetischer oder elektrostatischer Domänen zur Rastersondenmikroskopie einsetzbar.

## Patentansprüche

1. Halterung für eine Tastspitze eines Rasterkraft- oder Rastertunnelmikroskops zum Abtasten der Topographie einer Probenoberfläche, wobei zur interferometrischen Ermittlung der Bewegung der Tastspitze zumindest ein Lichtstrahlleiter eingesetzt ist, dessen Lichtstrahlaustritt mit geringem Abstand ortsfest gegenüber der sich relativ zum Lichtstrahlaustritt bewegenden Tastspitze derart angeordnet ist, daß mittels Interferometer die Interferenz zwischen am Lichtstrahlaustritt reflektiertem und von der Tastspitze reflektiertem Lichtstrahl meßbar ist,
**dadurch gekennzeichnet,**
daß der Lichtstrahlleiter (7) in einer relativ zur sich bewegenden Tastspitze ortsfest an der Halterung montierten Ferrule (6) geführt ist und die Tastspitze an der Ferrule derart befestigt ist, daß der Lichtstrahlaustritt (10) nach Montage der Ferrule einen vorgegebenen Abstand zur lichtstrahlreflektierenden Tastspitze (2) aufweist.

2. Halterung nach Anspruch 1,
**dadurch gekennzeichnet,**
daß zum Befestigen der Tastspitze (2) an der Ferrule (6) eine Steckverbindung (4) vorhanden ist.

3. Halterung nach Anspruch 2,
**dadurch gekennzeichnet,**
daß die Steckverbindung (4) zumindest ein kraftschlüssig verbindbares Kupplungselement (5) aufweist.

4. Halterung nach Anspruch 3,
**dadurch gekennzeichnet**,
daß ein rohrförmiges und in Achsrichtung geschlitztes Kupplungselement (5) auf der Ferrule (6) verspannbar ist.

5. Halterung nach einem der vorhergehenden Ansprüche,
**dadurch gekennzeichnet,**
daß die Ferrule (6) an einem Piezo-Rasterelement (13) befestigt ist.

## Claims

1. A mounting for a probe tip of a scanning force or scanning tunnelling microscope for scanning the topography of a test surface, wherein at least one light beam guide is used for the interferometric determination of the movement of the probe tip, the light beam outlet of which light beam guide is fixedly disposed at a short distance from the probe tip, which moves in relation to the light beam outlet, in such a way that the interference can be measured between the light beam reflected at the light beam outlet and that reflected by the probe tip,
characterised in that
the light beam guide (7) is guided in a ferrule (6) which is fixedly mounted on the mounting in relation to the moving probe tip, and the probe tip is fixed to the ferrule in such a way that after installing the ferrule the light beam outlet (10) is at a predetermined distance from the probe tip (2) which reflects the light beam.

2. A mounting according to claim 1,
characterised in that
a plug-in connector (4) is present for fixing the probe tip (2) to the ferrule (6).

3. A mounting according to claim 2,
characterised in that
the plug-in connector (4) comprises at least one coupling element (5) which can be connected non-positively.

4. A mounting according to claim 3,
characterised in that
a tubular coupling element (5), which is slit in the axial direction. can be clamped on the ferrule (6).

5. A mounting according to any one of the preceding claims,
characterised in that
the ferrule (6) is fixed to a piezo-scanning element (13).

## Revendications

1. Support pour la pointe d'exploration d'un microscope à balayage ou à effet tunnel, destinée à explorer la topographie de la surface d'un échantillon, au moins un guide de rayonnement lumineux étant prévu afin de déterminer par interférométrie le déplacement de la pointe d'exploration, guide dont la sortie du rayonnement lumineux est disposée en un emplacement fixe, à faible distance en vis-à-vis de la pointe d'exploration qui se déplace par rapport à la sortie du rayonnement lumineux, de telle sorte qu'à l'aide d'un interféromètre, on peut mesurer l'interférence entre le rayonnement lumineux réfléchi à la sortie du rayonnement lumineux et du rayonnement lumineux réfléchi par la pointe d'exploration,
**caractérisé** en ce que le guide de rayonnement lumineux (7) est guidé dans une férule (6), montée sur le support en un emplacement fixe par rapport à la pointe d'exploration qui se déplace, et la pointe d'exploration est fixée sur la férule de telle sorte que la sortie du rayonnement lumineux (10) présente, après le montage de la férule, une distance prescrite par rapport à la pointe d'exploration (2) réfléchissant le rayonnement lumineux.

2. Support selon la revendication 1, **caractérisé** en ce qu'un assemblage par emboîtement (4) est présent pour la fixation de la pointe d'exploration (2) sur la férule (6).

3. Support selon la revendication 2, **caractérisé** en ce que l'assemblage par emboîtement (4) présente au moins un élément d'accouplement (5) pouvant être assemblé à force.

4. Support selon la revendication 3, **caractérisé** en ce qu'un élément d'accouplement (5) tubulaire et fendu en direction axiale peut être assemblé avec serrage sur la férule (6).

5. Support selon une des revendications précédentes, **caractérisé** en ce que la férule (6) est fixée à un élément de balayage piézoélectrique (13).
